(19) Europäisches Patentamt
European Patent Office
Office européen des brevets

(11) EP 3 495 838 A1

(12) **EUROPEAN PATENT APPLICATION**

(43) Date of publication:
**12.06.2019  Bulletin 2019/24**

(51) Int Cl.:
***G01S 5/14*** (2006.01)

(21) Application number: **17205817.4**

(22) Date of filing: **07.12.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN**<br><br>(71) Applicant: **Gemalto M2M GmbH**<br>**81541 Munich (DE)** | (72) Inventors:<br>• **BREUER, Volker**<br>  **16727 BOETZOW (DE)**<br>• **ANTONOV, Iavor**<br>  **10965 BERLIN (DE)**<br><br>(74) Representative: **Grevin, Emmanuel**<br>  **Gemalto SA**<br>  **525 avenue du Pic de Bertagne**<br>  **CS 12023**<br>  **13881 Gemenos Cedex (FR)** |

(54) **METHOD FOR POSITIONING OF A USER EQUIPMENT OPERATING IN A CELLULAR NETWORK**

(57)    The present invention relates to a method for positioning of a user equipment operating in a cellular network, the user equipment being configured to ascertain location information of base stations of the cellular network, wherein the method comprises the steps of:
- obtaining cell specific reference signals from a serving base station and at least one other base station,
- obtaining from the serving base station a synchronization indication relating to time synchronization among the serving base station and said at least one other base station,
- determining a time difference of arrival of said reference signals of at least two base stations that are time synchronized,
- determine a position of the user equipment based on the location information of the respective base stations and the determined time differences of arrival.

Fig. 1

## Description

### FIELD OF THE INVENTION

The present invention relates to a method for positioning of a user equipment operating in a cellular network.

The invention also pertains to a user equipment using said method.

### BACKGROUND OF THE INVENTION

For a user equipment operating in a cellular network location related information play an increasingly important role. In particular for user equipments operating without movement, the geographic position is a constant that may be used in subsequent communication for many purposes, like forming a group of user equipments, taking advantage of power consumption aware communication when being stationary etc.

However a lot of such user equipments are optimized both in terms of hardware resources as only limited communication bandwidth is needed and power consumption, when operated with a battery only. Such optimization also includes that sensors for receiving signals from global navigation satellite systems (GNSS) are not provided.

For overcoming this situation approaches are currently under development for allowing a positioning, that means in particular the determination of the geographic position of a user equipment, by cellular network means only.

However such cellular network means are parts of advanced LTE features and beyond, and again require for a user equipment to fully support the LTE capabilities. User equipments operating only in lower LTE categories, like Cat NB-IoT, CAT-M and CAT-1 would take most profit from such measures, but are often not sufficiently capable of doing so, or avoid such measures for reducing power consumption because of required network communication with a positioning server in the cellular network.

It is therefore the goal of present invention to overcome the mentioned disadvantages and to propose a solution for autonomous network independent positioning with limited power usage for such user equipments.

Further alternative and advantageous solutions would, accordingly, be desirable in the art.

### SUMMARY OF THE INVENTION

For this it is according to a first aspect of the invention suggested a method to for positioning of a user equipment according to claim 1. It is further suggested according to a second aspect of the invention a user equipment according to claim 8.

According to the first aspect of the invention it is proposed a method for positioning of a user equipment operating in a cellular network, the user equipment being configured to ascertain location information of base stations of the cellular network, wherein the method comprises the steps of:

- obtaining cell specific reference signals from a serving base station and at least one other base station,
- obtaining from the serving base station a synchronization indication relating to time synchronization among the serving base station and said at least one other base station,
- determining a time difference of arrival of said reference signals of at least two base stations that are time synchronized,
- determine a position of the user equipment based on the location information of the respective base stations and the determined time differences of arrival. The invention relates to a user equipment for communication according to one of the known wireless technology standards, like 3G, 4G or beyond. The user equipment is equipped with the necessary circuitry for communicating over the air interface with the base stations, resp. eNodeBs of the cellular network. This comprises in particular transceiver circuitry, including receiving and transmitting capabilities. According to the circuitry also a separate structural design of transmitting circuitry and receiving circuitry is encompassed by the inventive user equipment. This in particular relates to a radio modem connected to a device.

The user equipment resp. its transceiver is configured to receive and decode signals from base stations.

The goal of the inventive method is the positioning of the user equipment.

Positioning of a user equipment practically means determination of the spatial location of the user equipment. Typically this means depicting the geographic co-ordinates (x,y) resp (latitude, longitude) of the position of the user equipment. Such possibility to locate an object is the backbone of a wide range of location based services.

It is known to equip user equipments with additional sensors for receiving signals from global navigation satellite systems (GNSS), and in response to provide in regular intervals over a defined interface a data structure indicating the current positions to the processing circuitry of the user equipment.

Also for cellular networks according to advanced wireless technology standards like LTE advanced, and New Radio (5G) network supported positioning methods are known. One of it is the Observed Time Difference Of Arrival (OTDOA) positioning system which works comparable to satellite based systems, except that instead of the satellites the downlink transmissions with a reference time are provided by the base station. The user equipment retrieves the received time difference of the transmissions from at least three cells, and sends them to the network component ESMLC (Evolved Serving Mobile Location Centre). The ESMLC provides so-called Positioning Reference Signals (PRS), that are transmitted by the eNodeBs. In the ESMLC the position is hence calculated.

However low cost user equipments are not configured to use such network services or comprise the necessary sensors for satellite based positioning. Such user equipments resp. the communication units are stripped down to the minimum for the designated task, like tracking devices, point of sales etc., which moreover are aware of its power consumption. Hence additional signalling to the ESMLC would - if possible at all - consume too much energy.

Hence, the inventive method leads to an autonomous calculation in the user equipment.

The method is based on the availability of location information of base stations of the cellular network. This means in particular that a location list or database with location information of at least parts of the base stations of the cellular network stored in a memory unit of the user equipment.

The method assumes that the user equipment is camping on a base station resp. eNodeB, the so-called serving base station.

The method preferably starts with obtaining cell specific reference signals from the serving base station and preferably at least one other base station in proximity.

Such reference signals are in particular the cell specific reference signals (RS) foreseen in LTE for maintaining synchronization of a once synchronized user equipment on an eNodeB. Such reference signals are regularly inserted into the downlink signal structure, and are basically available and strong enough to be detected in each LTE based transmission.

Secondly, either before or after obtaining the reference signals, the user equipment obtains a synchronization indication from the serving base station. With this synchronization indication the user equipment gets aware of the fact that the serving base station and the base stations around are timewise synchronized, hence, when analyzing the cell specific reference signal, the user equipment is assured that time differences only last from the distance between the user equipment and the base station, not from an asynchronous timing.

To be on the safe side, all involved base stations preferably indicate its synchronism, e.g. by a broadcast i.e supporting certain features or a set of features, but one should be sufficient, as otherwise the synchronization indication would make no sense.

When the base stations turn out to be synchronized then it is sufficient for the user equipment to depend upon the reference signals instead of positioning features of the RAN. This is advantageous as first the reference signals are available anyhow and usually transmitted with sufficient signal strength, second the user equipment saves power when it can rely on such signals without involving extra efforts for positioning features of the cellular network resp. RAN.

Hence the user equipment determines time differences of arrival for the received signals, in particular reference signals of at least two base stations, preferably each of the synchronized base stations. With the time differences the distance to the respective base stations is determined according to known algorithms, usually taking into account the speed of the signal distribution - which is typically light speed.

The position of the user equipment is determined based on the stored location information of the respective base stations and the distance information determined from the time difference of arrival of the signals from the base stations.

One of the base stations is preferably the serving base station, as it provides a global cell-ID through channels, preferably containing related SIB information, that are only readable for camping user equipments. By reading broadcast information only, a local cell-ID is made available - in particular by LTE through the master information block MIB-that is not unique in the whole cellular network and might lead to ambiguous detection of cell locations in the stored list of location information. However, it is within its radio area unambiguous.. The correct global cell-ID is derived from the local cell-ID and the knowledge of the global cell-ID of the serving cell.

Based on the global cell-ID the respective location information for each base station is retrievable from the stored location information.

This determination step follows preferably a common triangulation concept, that means with three base stations that are synchronized exactly one position is determined when the positions and the time difference of arrival is known, provided at least three of the at least three base stations are synchronized.

In case the time difference of arrival of only two synchronized base stations is available, it proposed a further embodiment of the inventive method wherein the exact position is determined by the presence or absence of signals of at least one base station in proximity of said at least two base stations.

When only for two base stations the location and distance could be determined, then a triangulation leads to two possible positions of the user equipment. When however signals from a third base station are retrieved, and this base station is located close to one of the two possible positions - which is figured out through the stored list of locations - then this position is sufficiently determined.

The same is true, when no signals from a third base station is retrieved and close to one of the possible positions it is known from the location list that a base station is available, but not for the other position.

With this embodiment it is therefore possible to determine the geographic position of the user equipment by only measuring the time difference of arrival from the reference signals from two base stations.

Moreover the third base station does not require to be synchronized with the other two base stations. So this embodiment allows positioning even at the edge of a synchronized base station area.

Further the third base station may be the serving base station. It is sufficient to retrieve the global cell-ID by one of the involved base stations, not necessarily one of the synchronized base stations, in order to match the local cell-Ids in proximity.

The inventive method is advantageous as it allows even for user equipments with low capacities, both in regards to processing power and power consumption requirements to determine a geographic position without having to use external sensors.

In the following, embodiments of the first aspect of the invention are described. Additional features elucidated in the context of different embodiments can be combined with each other to form further embodiments of the first aspect of present invention, as long as they are not explicitly described as forming mutually exclusive alternatives to each other.

According to a preferred embodiment it is suggested that where the synchronization indication comprises an indication relating to at least one of:

- activated carrier aggregation,
- Voice over LTE,
- CoMIP,
- MBSFN
- TDD
- intrafrequency carrier synchronization.

This embodiment encompasses special types of synchronization indications. The inventive method comprises that at least one of the options is used for determining the synchronization indication.

The various options are advantageous as they refer to already defined wireless technology standards. This means no change in standard is required to figure out the synchronization property of the respective base station. Hence it is sufficient for the user equipment to retrieve an indication of e.g. activated carrier aggregation to derive, that this is a synchronized base station in the sense of the inventive method. Such indication is typically part of the capability information that are provided by broadcast from the respective base station.

The activated carrier aggregation indication relates to a feature introduced with LTE-Advanced (Rel. 10), which has the goal to achieve a higher data throughput by combining a plurality of component carriers. In the case of intraband aggregation over more than one cell, the involved base stations need to be synchronized in order to schedule the service well.

For base stations supporting Voice over LTE (VoLTE) the synchronization is likewise assumed, however with a lower accuracy. For the feature Coordinated Multi-point Transmission/Reception (CoMIP), introduced with Release 11 of LTE, the timing synchronization has a much lower maximum delay, and consequently a much better positioning accuracy is possible, which lies in the range of satellite based positioning. CoMIP refers to a coordinated scheduling of multiple cells, hence the timing synchronization is a natural part of this technology.

The support of a Multimedia Broadcast Single Frequency Network is a means to allow multimedia broadcast/multicast service (MBMS), for delivering broadcast to a multicast service, e.g. for streaming. For that also synchronized base stations are required.

Further when working in a Time-division duplex (TDD) mode, the base stations need to be synchronized in order to prevent interference between the base stations.

The support of each of these modes are preferably made available to the camping user equipments by means of the capability information provided by related signaling, preferably the system information.

The user equipment preferably retrieves such synchronization indication, at least from one base station, and can then continue with the position determination according to the inventive method.

In an advantageous embodiment it is suggested that the synchronization indication relates to a base station capability the user equipment is incapable of supporting.

This embodiment refers to low cost devices, that are incapable of supporting some or all of the capabilities mentioned before. A couple of the capabilities relate to high data throughput services of the base stations, while low cost devices have a greater need for positioning without support from the cellular network or an additional sensor. Therefore it is suggested that the user equipment only figures out whether the base station supports such services, while it is incapable of using the services itself. The detection of the capability of the base station is hence sufficient for the step of determining the synchronization indication.

In another preferred embodiment it is proposed a method wherein in case the user equipment determines that the at least two base stations are equipped with a global navigation satellite system receiver, said determination being at least based on providing a global navigation satellite system time indication in its broadcast information or from information locally stored in the user equipment, then said base stations are acknowledged to be time synchronized.

Alternatively the user equipment has the chance to figure out that base stations are synchronized by this embodiment. It does not relate to a capability of the base station, but if it comprises a GNSS receiver. While it is not a mandatory requirement, however a couple of base stations have such a GNSS receiver on board.

The availability is preferably indicated by a time indication enhanced by the information in the broadcast information that the time indication is derived from a GNSS receiver. When this is the case, the base station is supposed to be time synchronized with all base stations that also comprise a GNSS receiver. Preferably all base stations used for positioning provide this capability.

Hence simply the indication that a GNSS receiver is available suffices for figuring out that the time synchronization is accomplished.

According to another aspect of the invention it is proposed that at least parts of the ascertained location information are retrieved on demand from a remote server connectively coupled to the cellular network.

This embodiment relates to the stored list of locations of base stations, which are needed to determine the position of the user equipment. While at least parts of such location information are preferably stored in the memory of the user equipments, it is still possible, that the stored location information of the base stations are not complete or not up to date. For a roaming user equipment even none of the location information might be available.

For that purpose it is suggested to introduce a remote server that is accessed for downloading the required location information. That remote server is in particular part of the cellular network, or at least communicatively coupled, that means accessible e.g. via internet.

The address of such a remote server is preferably made available by the cellular network, e.g. by means of the SIM/USIM card or on demand resp. by broadcast.

For a roaming user equipment a fresh download is recommended, at least of the location information of such base stations in proximity, e.g. the current tracking area, and potentially the tracking area in the neighborhood.

Other on demand downloads are in particular time triggered, or when other indications are available that the stored location information are not correct.

According to a second aspect of the invention it is proposed a user equipment operating in a cellular network, the user equipment being configured to ascertain location information of base stations of the cellular network, wherein the user equipment is configured to:

- obtain cell specific reference signals from a serving base station and at least one other base station,
- obtain from the serving base station a synchronization indication relating to time synchronization among the serving base station and said at least one other base station,
- determine a time difference of arrival of said reference signals of at least two base stations that are time synchronized,
- determine a position of the user equipment based on the location information of the respective base stations and the determined time differences of arrival. The user equipment comprises receiving and transmitting circuitry, in particular a transceiver. Also a separate structural design of transmitting circuitry and receiving circuitry is encompassed by the inventive user equipment, like a radio modem connected to a control appliance. The receiving and transmitting circuitry is used for operating with network nodes of a cellular network, in particular base stations, nodeBs, eNodeBs etc. depending upon the wireless technology standards supported by the cellular network, resp. the base stations.

The user equipment further comprises memory for storing location information of the base stations.

Preferably such user equipment of the second aspect of the invention relates to low cost / low capability devices that are designed to rarely carry out data transmissions or receptions, compared to a smartphone. Even for stationary user equipments it makes sense, at least once, to determine the current position.

Principally, the second aspect of the invention shares the advantages of the first aspect of the invention. In particular the user equipment has preferred embodiments that correspond to embodiments of the method described above.

As it is shown this invention advantageously solves the depicted problem of determining the position of a user equipment, which has not the circuitry for using GNSS positioning, and tries to avoid network based positioning method, in particular due to power consumption constraints. As it is shown, the suggested solution does not need to suffer in terms of accuracy compared with the known solutions.

## BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.

Fig. 1    represents a user equipment of the type to which the present invention is applied as an embodiment;

Fig. 2    shows a sequence diagram of an embodiment of the inventive method;

Fig. 3    displays a user equipment of the type to which the present invention is applied in another embodiment.

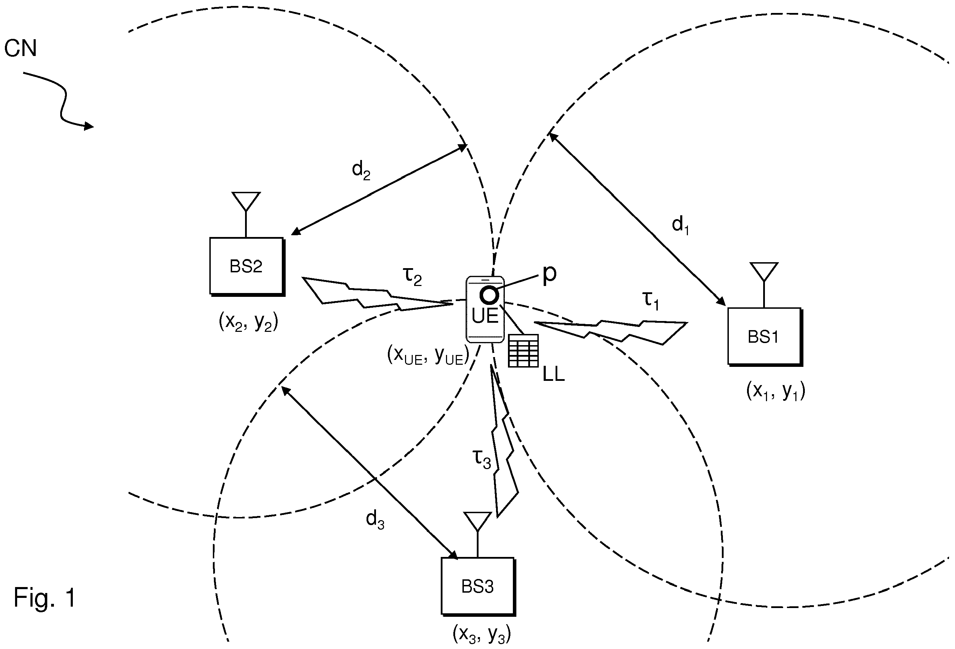

FIG. 1 schematically shows a user equipment UE of the type to which the present invention is applied as an embodiment in the surrounding of three base stations BS1, BS2, BS3 of a cellular network CN. The user equipment is camping on at least one of the base stations.

Displayed is a user equipment in the form factor of a smartphone. However other, more simple types of device e.g. for machine-type communication, are mainly addressed by the inventive method. Nonetheless, the inventive method is not exclusive to one or the other category of user equipments.

The shown base stations BS1, BS2, BS3 are additionally time synchronized. This is in particular the case due to the support of at least one service which requires time synchronized base stations, in particular Coordinated Multi-point Transmission/Reception (CoMIP). With the feature of being time synchronized a base station would be able to send an accurate time stamp, and each receiver would retrieve the same time stamp from two time synchronized base stations, under the condition that the transmission conditions are the same.

Further over the air interface the base station transmits information relative to its capabilities. This is in particular happening through a broadcast e.g. via system information blocks (SIBs).

One of that capabilities is the information relating to the CoMIP support of the base station, and the base stations in proximity.

For each of the base stations BS1, BS2, BS3 it is known the location, in particular by means of a geographic co-ordination pair $(x_1,y_1)$, $(x_2,y_2)$, $(x_3,y_3)$. Such location information of base stations are stored in the location list LL of the user equipment UE.

With that the user equipment has the knowledge that signals from each of the base stations which comprise a time indication can be used for position calculation.

The position calculation is carried out by a time difference of arrival calculation. For each signal retrieved from a base station the user equipment may calculate the time difference $\tau_1$, $\tau_2$, $\tau_3$ between the arrival time and the submitted timestamp of the data transmission over the air interface. From the time difference of arrival (TDOA) a distance is calculated according to the commonly known formula:

$$d = c * (\tau_{arrival} - \tau_{sent})$$

where c is the speed of light.

With the calculated distance $d_1$, $d_2$, $d_3$ a circle around each base station BS1, BS2, BS3 is derived. The locations of each point of the circle per base station in a two dimensional field is however calculated by the formula:

$$d = \sqrt{(x_{UE} - x)^2 + (y_{UE} - y)^2}$$

For d the measured distance from above can be retrieved, and *x, y* depict the position of the respective base stations. So the equation only needs to be solved to $x_{UE}$ resp. $y_{UE}$, but this does not retrieve unique results, but define the possible positions in the distance around the base stations location x, *y,* thus forming a circle.

The position p where the circles around the base stations intersect, is the determined position in geo-coordinates $(x_{UE}, y_{UE})$ of the user equipment UE.

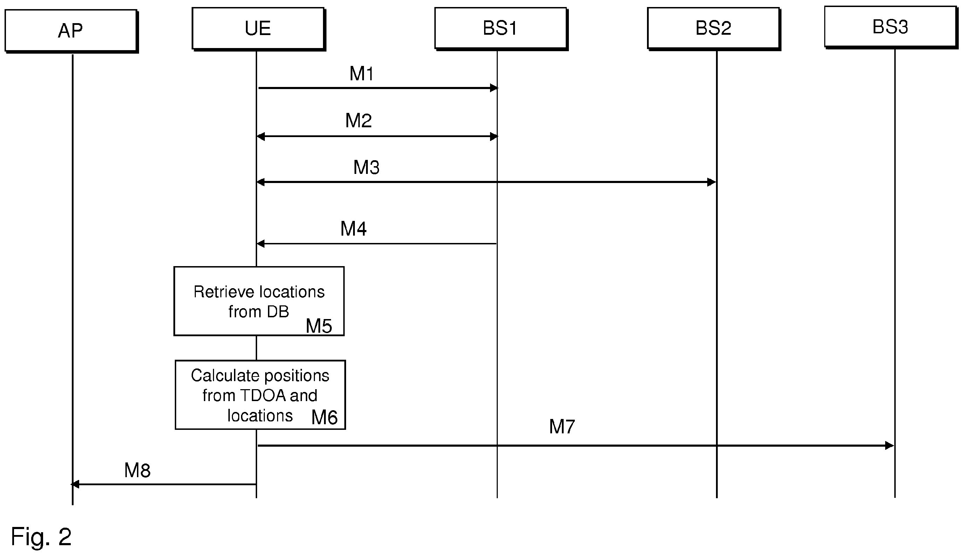

FIG. 2 shows in a sequence diagram a process flow of an exemplifying embodiment of the invention. The user equipment UE in this embodiment is communicatively connected to a control application AP, thus the UE is effectively the radio modem or communication unit of the control application.

The process flow starts with the user equipment sending at least one message M1 to base station BS1, in order to camp on said base station. After powering up the user equipment UE it requires registration, authentication and a couple of additional steps leading to messages going to and fro between user equipment UE and base station BS1. When the user equipment was actually registered, the message M1 only depicts a reselection, following a suitability check to find the best suitable base station for the user equipment.

A dedicated response from the base station BS1 is typically carried out, but in this figure omitted out of simplicity reasons. After message M1 was sent, it is assumed that the user equipment is camping on base station BS1.

Then the user equipment retrieves from two base stations BS1 and BS2 in the proximity of the user equipment a message M2, M3, e.g. via broadcast where the user equipment obtains the reference signals from the received transmissions. Such reference signals are regularly inserted into the downlink signal structure of each LTE based transmission.

Based on the reference signals the user equipment can derive the time difference of arrival TDOA.

With message M4 the user equipment retrieves, preferably via a broadcast from the serving base station, a synchronization indication. This is preferably part of the capabilities, i.e. services that can be retrieved from said base station, and informs the user equipment - typically indirectly - about the fact that the base station is time synchronized with the base stations in the surrounding.

In step M5 the user equipment then retrieves the location of base station BS1 and BS2, and preferably also from BS3, that is all base stations where the user equipment can decode signals from in the current position. The location is stored in the location list LL available in the memory of the base station. Should the respective base station's location not be available, then a request to a remote server communicatively coupled to the cellular network CN is to be carried out after step M5.

When all the information are gathered, and the synchronization indication was retrieved, then the user equipment carries out in M6 the distance calculation based on the time difference of arrival and the locations of the base stations.

As in this example the reference signals, and consequently the time difference of arrival, is retrieved only from two base stations, the calculation leads to probably two candidate points, at the two intersections of the distance circles, as visible in FIG. 1.

Hence the user equipment checks with message M7 signals from at least one other base station BS3. This base station does not need to be synchronized with the other base stations BS1, BS2. It only required to know the position of the base station.

Based on this information from the two possibilities the location can be derived, and provided with message M8 - typically on demand - to the control application AP.

Should the base stations BS1, BS2, and BS3 are all be synchronized and the user equipment UE can derive time difference of arrival for all said base stations, then a position p is unambiguously found out.

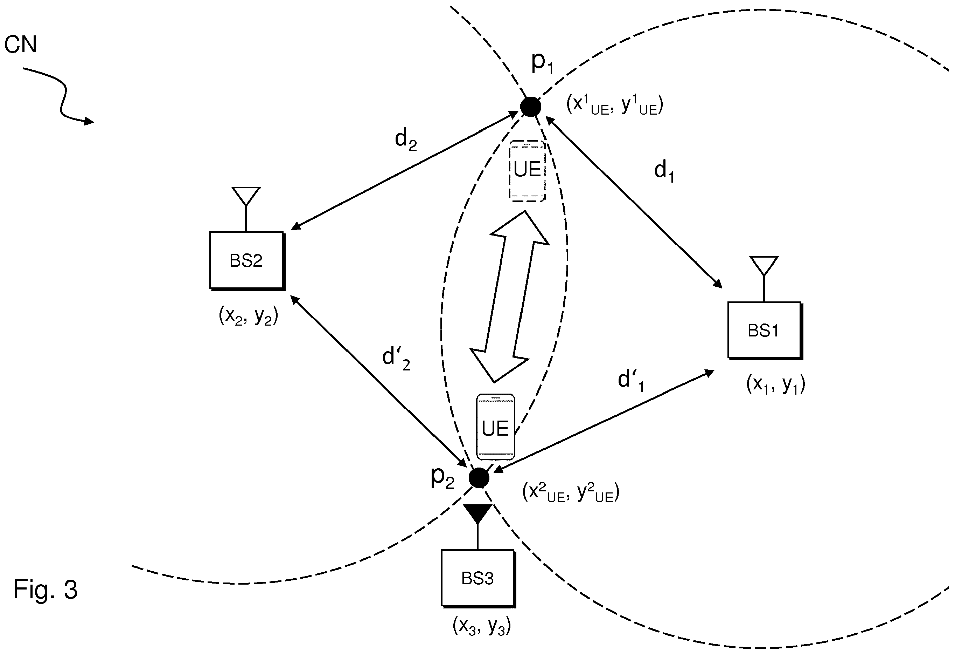

How the calculation with reference signals from only two base stations is carried out is shown in FIG. 3.

Here the situation is comparable to the one of FIG. 1, except that based on time difference of arrival a distance *d1, d2* is determined for only two base stations BS1, BS2.

The result is, that at the intersections of the resulting circles the candidate positions p1, p2 are determined. For determining the position of the user equipment hence it needs to be decided which of the positions p1, p2 is the correct one.

This situation is solved by means of base station BS3, for which the location $(x_3, y_3)$ is known from the location list LL.

For the user equipment, which can retrieve in the exemplifying embodiment strong signals from base station BS3, it is hence clear, that it needs to be located close to the base station BS3. This leads to the result that only the candidate position p2 can be the correct location of the user equipment, as its location is closer to base station BS3 than the candidate position p1.

This shows that even with a retrieval of the synchronized time difference of arrival from only two base station the position of a user equipment can be determined with sufficient accuracy, and without additional equipment or support from the cellular network.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be. The above detailed description is, therefore, not to be taken in a limiting sense, and the scope of the present invention is defined only by the appended claims, appropriately interpreted, along with the full range of equivalents to which the claims are entitled.

**Claims**

1. Method for positioning of a user equipment (UE) operating in a cellular network (CN), the user equipment being configured to ascertain location information (LL) of base stations of the cellular network, wherein the method comprises the steps of:

    - obtaining cell specific reference signals from a serving base station (BS1) and at least one other base station (BS2),
    - obtaining from the serving base station a synchronization indication (M4) relating to time synchronization among the serving base station and said at least one other base station,
    - determining a time difference of arrival of said reference signals of at least two base stations that are time synchronized,
    - determine a position (p) of the user equipment based on the location information (LL) of the respective base stations and the determined time differences of arrival.

2. Method according to claim 1, wherein the exact position (p) is determined by the presence or absence of signals of at least one base station (BS3) in proximity of said at least two base stations (BS1, BS2).

3. Method according to at least one of the claims 1 or 2, where the synchronization indication (M4) comprises an indication relating to at least one of:

    - activated carrier aggregation,
    - Voice over LTE,
    - CoMIP,
    - MBSFN,
    - TDD,
    - intrafrequency carrier synchronization.

4. Method according to claim 3, wherein the synchronization indication (M4) relates to a base station capability the user equipment (UE) is incapable of supporting.

5. Method according to claim 1, wherein at least parts of the ascertained location information (LL) are stored in a memory unit of the user equipment (UE).

6. Method according to at least one of the claims 1 or 2, wherein in case the user equipment (UE) determines that the at least two base stations (BS1, BS2) are equipped with a global navigation satellite system receiver, said determination being at least based on providing a global navigation satellite system time indication in its broadcast information or from information locally stored in the user equipment,
then said base stations are acknowledged to be time synchronized.

7. Method according to claim 1,
wherein at least parts of the ascertained location information (LL) are retrieved on demand from a remote server connectively coupled to the cellular network (CN).

8. User equipment (UE) operating in a cellular network (CN), the user equipment being configured to ascertain location information (LL) of base stations of the cellular network,
wherein the user equipment is configured to:

- obtain cell specific reference signals from a serving base station (BS1) and at least one other base station (BS2),
- obtain from the serving base station a synchronization indication (M4) relating to time synchronization among the serving base station and said at least one other base station,
- determine a time difference of arrival of said reference signals of at least two base stations that are time synchronized,
- determine a position (p) of the user equipment (UE) based on the location information (LL) of the respective base stations and the determined time differences of arrival.

9. User equipment (UE) according to claim 8,
configured to determine the exact position (p) by the presence or absence of signals of at least one base station (BS3) in proximity of said at least two base stations (BS1, BS2).

10. User equipment (UE) according to at least one of the claims 8 or 9,
where the synchronization indication (M4) comprises an indication relating to at least one of:

- activated carrier aggregation,
- Voice over LTE,
- CoMIP,
- MBSFN,
- TDD,
- intrafrequency carrier synchronization.

11. User equipment (UE) according to at least one of the claim 8 to 9,
wherein the synchronization indication (M4) relates to a base station capability the user equipment (UE) is incapable of supporting.

12. User equipment (UE) according to claim 8,
comprising a memory unit, the user equipment being configured to store at least parts of the ascertained location information (LL) in said memory unit.

13. User equipment (UE) according to at least one of the claims 8 or 9,
configured to determine if the at least two base stations (BS1, BS2) are equipped with a global navigation satellite system receiver, said determination being at least based on providing a global navigation satellite system time indication in its broadcast information or from information locally stored in the user equipment,
and in case the determination indicates that the at least two base stations are equipped with a global navigation satellite system receiver,
to acknowledge that said base stations are time synchronized.

14. User equipment (U)E according to claim 8,
configured to retrieve at least parts of the ascertained location information (LL) on demand from a remote server connectively coupled to the cellular network.

Fig. 1

Fig. 2

Fig. 3

EP 3 495 838 A1

Europäisches
Patentamt

European
Patent Office

Office européen
des brevets

## EUROPEAN SEARCH REPORT

**Application Number**

EP 17 20 5817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/026041 A1 (MURDOCK RONALD G [US] ET AL) 2 February 2012 (2012-02-02)<br><br>* figures 2-6 *<br>----- | 1-4, 6-11,13, 14 | INV.<br>G01S5/14 |
| X | EP 3 182 149 A1 (DEUTSCHE TELEKOM AG [DE]) 21 June 2017 (2017-06-21)<br><br>* paragraphs [0070] - [0121]; figures 5-6 *<br>----- | 1-4, 6-11,13, 14 | |
| A | US 2008/280624 A1 (WRAPPE THOMAS KEITH [US]) 13 November 2008 (2008-11-13)<br>* paragraph [0003]; figure 1 *<br>----- | 1-14 | |

**TECHNICAL FIELDS SEARCHED (IPC)**

G01S

The present search report has been drawn up for all claims

| Place of search | Date of completion of the search | Examiner |
|---|---|---|
| Munich | 4 June 2018 | Kern, Olivier |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 17 20 5817

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2018

| Patent document cited in search report | | Publication date | Patent family member(s) | | Publication date |
|---|---|---|---|---|---|
| US 2012026041 | A1 | 02-02-2012 | US | 2012026041 A1 | 02-02-2012 |
| | | | WO | 2012018672 A1 | 09-02-2012 |
| EP 3182149 | A1 | 21-06-2017 | NONE | | |
| US 2008280624 | A1 | 13-11-2008 | BR | PI0418696 A | 12-06-2007 |
| | | | US | 2008280624 A1 | 13-11-2008 |
| | | | WO | 2005106523 A1 | 10-11-2005 |

EPO FORM P0459

For more details about this annex : see Official Journal of the European Patent Office, No. 12/82